# FASCICULE DE BREVET EUROPEEN

(11) **EP 3 499 140 B1**
(45) Date de publication et mention de la délivrance du brevet: **15.07.2020**
(21) Numéro de dépôt: 18211607.9
(22) Date de dépôt: 11.12.2018
(51) Int. Cl.: F24F 3/147, F24F 5/00, F24F 12/00, F24F 3/14

(54) **CENTRALE DE TRAITEMENT D'AIR DOUBLE FLUX ET À DESSICCATION ADAPTÉE AUX BÂTIMENTS D'ACTIVITÉ AQUATIQUE, ET PROCÉDÉ DE PILOTAGE D'UNE TELLE CENTRALE**
LUFTAUFBEREITUNGSANLAGE MIT DOPPELSTRÖMUNG UND ANGEMESSENER TROCKNUNG FÜR GEBÄUDE MIT WASSERAKTIVITÄTEN, SOWIE VERFAHREN ZUM STEUERN EINER SOLCHEN ANLAGE
DOUBLE-FLOW AIR PROCESSING AND DESSICATION PLANT SUITABLE FOR WATERCRAFT ACTIVITY BUILDINGS, AND METHOD FOR CONTROLLING SUCH A PLANT

(30) Priorité: 13.12.2017 FR 1762053
(43) Date de publication de la demande: 19.06.2019
(73) Titulaire: Sustain'air, 06200 Nice (FR)
(72) Inventeur: LAMOUCHE, Thierry, 06560 VALBONNE (FR)
(74) Mandataire: Chevalier, Renaud Philippe

(56) Documents cités:
- EP-A1- 2 787 294
- WO-A1-01/71260
- FR-A1- 3 042 856
- US-B1- 6 199 394

## Description

La présente invention se rapporte à une centrale de traitement d'air double flux pour la régulation thermique et le renouvellement d'air d'au moins une zone à traiter. Elle se rapporte plus particulièrement à une centrale de traitement d'air à dessication.

La présente invention trouve une application favorite, et non limitative, dans le traitement d'air d'un bâtiment d'activité aquatique, tel qu'une piscine couverte, et de manière générale dans le traitement d'air d'un bâtiment ayant un besoin de régulation en température (par exemple dans une plage de température entre 10 et 40 °C) et en humidité (par exemple dans une plage d'humidité absolue entre 4 et 20 g/kg).

L'invention s'applique notamment, à titre non limitatif, au traitement d'air d'un bâtiment ayant un besoin de régulation en humidité pour des ambiances nécessitant une humidification constante avec une humidité absolue supérieure à 10 g/kg, et notamment comprise entre 10 et 20 g/kg.

Dans le secteur des piscines couvertes, il est connu d'employer des centrales de traitement d'air qui utilisent l'air vicié prélevé dans la piscine couverte en le réinjectant mélangé avec de l'air neuf prélevé à l'extérieur, où l'air recyclé et réinjecté est déshumidifié au moyen d'une pompe à chaleur.

Ces centrales de traitement d'air restent tout de même très énergivores, du fait de l'emploi d'une pompe à chaleur et du fait de l'utilisation quasi systématique de froid pour gérer les problèmes d'humidité, et présentent en plus l'inconvénient de concentrer les polluants présents dans l'air vicié (en particulier les chloramines) pour les réinjecter dans l'air neuf.

L'état de la technique peut également être illustré par l'enseignement de la demande de brevet EP 2 787 294 A1 qui divulgue une centrale de traitement d'air à dessication comprenant une roue dessicante et une roue de récupération interposées sur deux voies de circulation d'air. Bien que performante en mode de refroidissement, une telle centrale de traitement d'air à dessication ne s'avère cependant pas assez performante dans un mode de chauffage (autrement dit en saison froide telle qu'en hiver) pour souffler un air chaud et ayant une humidification élevée. En effet, en saison froide, l'air neuf est généralement froid et sec, de sorte qu'il est nécessaire que la centrale de traitement d'air procure un chauffage suffisant et aussi une humidification suffisante, ce qui est difficile pour cette centrale de traitement d'air à dessication où la récupération en température effectuée dans la roue de récupération n'est pas suffisante pour à la fois procurer le chauffage et l'humidification souhaités.

La présente invention a pour but de résoudre en tout ou partie les inconvénients précités, en proposant une centrale de traitement d'air à dessication qui est adaptée dans un mode de chauffage pour souffler un air chaud et ayant une humidification constante avec une humidité absolue supérieure à 10 g/kg, et notamment comprise entre 10 et 20 g/kg, tout en limitant la consommation énergétique.

Un autre but de l'invention est de proposer une centrale de traitement d'air qui évite, ou du moins limite, une réinjection d'air vicié chargé en polluants pour justement éviter, ou du moins limiter, la concentration de polluants dans l'air neuf soufflé.

Un autre but de l'invention est de proposer une centrale de traitement d'air qui répond aux exigences et aux besoins pour le traitement d'air d'une piscine couverte, et de manière générale d'un bâtiment ayant un besoin de régulation en température et en humidité pour des ambiances nécessitant une humidification élevée.

A cet effet, elle propose une centrale de traitement d'air double flux pour la régulation thermique et le renouvellement d'air d'au moins une zone à traiter, ladite centrale étant une centrale de traitement d'air à dessication qui comporte au moins :
- deux voies de circulation d'air entre la zone et l'extérieur, comprenant une voie de reprise et une voie de soufflage ;
- un ventilateur de reprise placé sur la voie de reprise pour prélever un air vicié dans la zone et le rejeter vers l'extérieur ;
- un ventilateur de soufflage placé sur la voie de soufflage pour aspirer un air neuf à l'extérieur et le souffler dans la zone ;
- une roue dessicante interposée sur les deux voies de circulation d'air ;
- un échangeur thermique de récupération interposé sur les deux voies de circulation d'air et procurant un échange calorifique entre l'air vicié prélevé dans la zone et l'air neuf aspiré à l'extérieur ;
- une batterie chauffante de régénération placée sur la voie de reprise en amont de la roue dessicante et en aval de l'échangeur thermique de récupération, et procurant un chauffage de l'air vicié pour une régénération de la roue dessicante ;
- un humidificateur de soufflage placé sur la voie de soufflage en aval de l'échangeur thermique de récupération ;
- une batterie chauffante de chauffage placée sur la voie de soufflage en aval de l'échangeur thermique de récupération ;
- un générateur thermique en liaison avec la batterie chauffante de régénération et avec la batterie chauffante de chauffage ;
où cette centrale de traitement d'air double flux comprend en outre un échangeur thermique enthalpique interposé sur les deux voies de circulation d'air entre l'échangeur thermique de récupération et la zone, de sorte que l'humidificateur de soufflage et la batterie chauffante de chauffage sont en aval de l'échangeur thermique enthalpique sur la voie de soufflage, ledit échangeur thermique enthalpique procurant un échange calorifique et d'humidité entre l'air vicié prélevé dans la zone et l'air neuf soufflé dans la zone.

Ainsi, grâce à l'invention, avec l'ajout de l'échangeur thermique enthalpique, à la suite de la roue dessicante et de l'échangeur thermique de récupération, l'humidification se fait principalement par récupération d'humidité sur l'air vicié dans cet échangeur thermique enthalpique. Cette récupération performante va permettre de réduire fortement voire de supprimer les besoins d'humidification par l'humidificateur de soufflage en mode de chauffage.

Dans un mode de chauffage, l'échangeur thermique de récupération et l'échangeur thermique enthalpique sont activés de sorte que la centrale de traitement d'air procure une récupération de chaleur issue de l'air vicié majoritairement par l'échangeur thermique de récupération, et une récupération d'humidité issue de l'air vicié par l'échangeur thermique enthalpique.

Selon une possibilité, dans un mode de rafraîchissement pour un abaissement de la température et/ou de l'humidité dans la zone :
- la roue dessicante est activée pour procurer une déshumidification et un chauffage de l'air neuf entrant dans la voie de soufflage et, en parallèle, une humidification et un refroidissement de l'air vicié sortant de la voie de reprise ;
- l'échangeur thermique de récupération est activé pour refroidir l'air neuf en sortie de la roue dessicante et réchauffer l'air vicié sortant de l'échangeur thermique enthalpique ;
- l'échangeur thermique enthalpique est inactivé ;
- la batterie chauffante de chauffage est inactive ;
- l'humidificateur de soufflage procure un refroidissement de l'air neuf en sortie de l'échangeur thermique de récupération et un ajustement du niveau d'humidité de l'air soufflé dans la zone ;
- la batterie chauffante de régénération est activée pour réchauffer l'air vicié sortant de l'échangeur thermique de récupération pour une régénération de la roue dessicante.

Selon une autre possibilité de l'invention, dans un mode de chauffage pour une augmentation de la température dans la zone :
- la roue dessicante est désactivée ;
- l'échangeur thermique de récupération est activé pour réchauffer l'air neuf entrant dans la voie de soufflage et refroidir l'air vicié sortant de l'échangeur thermique enthalpique ;
- l'échangeur thermique enthalpique est activé pour humidifier l'air neuf sortant de l'échangeur thermique de récupération par récupération de l'humidité présente dans l'air vicié prélevé dans la zone ;
- la batterie chauffante de chauffage est activée ;
- la batterie chauffante de régénération est inactivée ; et
- l'humidificateur de soufflage procure une humidification de l'air neuf en sortie de l'échangeur thermique enthalpique si nécessaire.

Selon une caractéristique, la centrale de traitement d'air double flux comprend en outre un humidificateur de reprise placé sur la voie de reprise en amont de l'échangeur thermique enthalpique.

Selon une autre caractéristique, l'échangeur thermique enthalpique est du type rotatif.

Dans une réalisation particulière, la batterie chauffante de chauffage est placée sur la voie de soufflage en aval de l'échangeur thermique enthalpique et en amont de l'humidificateur de soufflage.

Dans un mode de réalisation particulier, l'échangeur thermique de récupération est choisi parmi une roue de récupération, un échangeur à courant croisé, un échangeur à contre-courant, un échangeur à plaques à contre-courant.

L'invention se rapporte également à un procédé de traitement d'air pour la régulation thermique et le renouvellement d'air d'au moins une zone à traiter, ledit procédé consistant à piloter une centrale conforme à l'invention selon au moins deux modes de fonctionnement :
- un mode de rafraîchissement pour un abaissement de la température et/ou de l'humidité dans la zone, dans lequel :
   - la roue dessicante est activée pour procurer une déshumidification et un chauffage de l'air neuf entrant dans la voie de soufflage et, en parallèle, une humidification et un refroidissement de l'air vicié sortant de la voie de reprise ;
   - l'échangeur thermique de récupération est activé pour refroidir l'air neuf en sortie de la roue dessicante et réchauffer l'air vicié sortant de l'échangeur thermique enthalpique ;
   - l'échangeur thermique enthalpique est inactivé ;
   - la batterie chauffante de chauffage est inactive ;
   - l'humidificateur de soufflage procure un refroidissement de l'air neuf en sortie de l'échangeur thermique de récupération et un ajustement du niveau d'humidité de l'air soufflé dans la zone ; et
   - la batterie chauffante de régénération est activée pour réchauffer l'air vicié sortant de l'échangeur thermique de récupération pour une régénération de la roue dessicante ;
- un mode de chauffage pour une augmentation de la température dans la zone, dans lequel :
   - la roue dessicante est désactivée ;
   - l'échangeur thermique de récupération est activé pour réchauffer l'air neuf entrant dans la voie de soufflage et refroidir l'air vicié sortant de l'échangeur thermique enthalpique ;
   - l'échangeur thermique enthalpique est activé pour humidifier l'air neuf sortant de l'échangeur thermique de récupération par récupération de l'humidité présente dans l'air vicié prélevé dans la zone ;
   - la batterie chauffante de chauffage est activée ;
   - la batterie chauffante de régénération est inactivée ; et
   - l'humidificateur de soufflage procure une humidification de l'air neuf en sortie de l'échangeur thermique enthalpique si nécessaire.

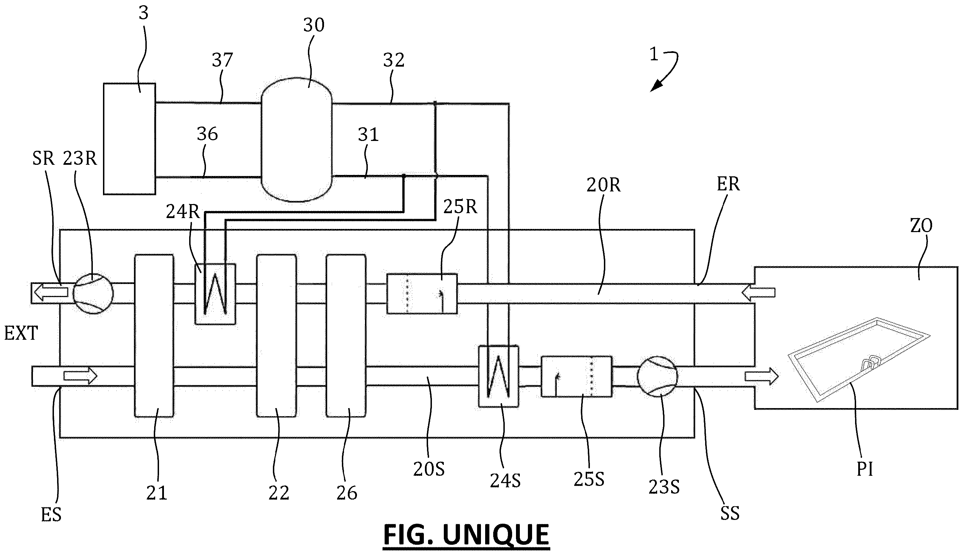

D'autres caractéristiques et avantages de la présente invention apparaîtront à la lecture de la description détaillée ci-après, d'un exemple de mise en œuvre non limitatif, faite en référence à la figure annexée qui est une vue schématique d'une centrale de traitement d'air selon un mode de réalisation de l'invention.

En référence à la figure, une centrale de traitement d'air double flux 1 selon l'invention est prévue pour la régulation thermique et le renouvellement d'air d'au moins une zone ZO à traiter, tel qu'un bâtiment d'activité aquatique accueillant une piscine PI couverte ou intérieure et nécessitant une humidification constante avec une humidité relative comprise entre 10 et 20 g/kg.

Cette centrale de traitement d'air double flux 1 comprend deux voies parallèles de circulation d'air entre la zone ZO et l'extérieur EXT, à savoir :
- une voie de reprise 20R pour la circulation de l'air de la zone ZO vers l'extérieur EXT ; et
- une voie de soufflage 20S pour la circulation de l'air de l'extérieur EXT vers la zone ZO.

Pour la suite de la description, les notions « amont », « aval », « entrée » et « sortie » se réfèrent systématiquement au sens de circulation de l'air dans la voie concernée ou dans l'élément concerné. Ainsi, l'entrée ES de la voie de soufflage 20S se situe du côté de l'extérieur EXT, tandis que sa sortie SS se situe du côté de la zone ZO. A l'inverse, l'entrée ER de la voie de reprise 20R se situe du côté de la zone ZO, tandis que sa sortie SR se situe du côté de l'extérieur EXT. Un premier élément est disposé en amont d'un second élément sur une voie, lorsque ce premier élément est situé plus près de l'entrée de la voie que le second élément. A l'inverse, un premier élément est disposé en aval d'un second élément sur une voie, lorsque ce premier élément est situé plus près de la sortie de la voie que le second élément.

La centrale de traitement d'air double flux 1 comprend successivement les éléments suivants interposés sur les deux voies VR, VS, en partant de l'extérieur EXT en direction de la zone ZO :
- une roue dessicante 21 ;
- un échangeur thermique de récupération 22, notamment du type roue de récupération ; et
- un échangeur thermique enthalpique 26, notamment du type échangeur rotatif.

La roue dessicante 21 intègre un système de mise en marche/arrêt, tel qu'un système motorisé, afin de pouvoir piloter à distance sa mise en marche/arrêt. De même, l'échangeur thermique de récupération 22 intègre un système de mise en marche/arrêt, tel qu'un système motorisé, afin de pouvoir piloter à distance sa mise en marche/arrêt. De même, l'échangeur thermique enthalpique 26 intègre un système de mise en marche/arrêt, tel qu'un système motorisé, afin de pouvoir piloter à distance sa mise en marche/arrêt.

La centrale de traitement d'air double flux 1 comporte également, sur sa voie de reprise 20R, de son entrée ER jusqu'à sa sortie SR, les éléments suivants :
- un humidificateur de reprise 25R placé en amont de l'échangeur thermique enthalpique 26 ;
- une batterie chauffante de régénération 24R placée entre l'échangeur thermique de récupération 22 et la roue dessicante 21, autrement dit en amont de la roue dessicante 21 et en aval de l'échangeur thermique de récupération 22 ;
- un ventilateur de reprise 23R placé en aval de la roue dessicante 21, pour rejeter l'air de reprise aspiré dans la zone ZO vers l'extérieur EXT.

Le ventilateur de reprise 23R peut cependant être placé ailleurs sur la voie de reprise 20R, par exemple en amont de l'humidificateur de reprise 25R.

L'humidificateur de reprise 25R est alimenté en eau par une canalisation d'eau (non visible) branchée sur un réseau d'eau (eg. le réseau du bâtiment), et sur laquelle est placée une pompe de mise en circulation de l'eau. Il est également avantageux de prévoir, sur cette canalisation d'eau, un dispositif de traitement d'eau, allant d'un simple filtre jusqu'à un dispositif à osmose inverse, dont la technologie dépendra de la qualité de l'eau (dureté, pH, etc.).

En outre, au moins un filtre peut être placé sur la voie de reprise 20R, de préférence en amont de l'humidificateur de reprise 25R, pour filtrer l'air extrait de la zone ZO avant d'entrer dans les composants de la centrale de traitement d'air double flux 1.

De plus, un bipasse ou by-pass, par exemple calibré entre 10 et 30 %, peut être placé entre l'entrée de la batterie chauffante de régénération 24R et la sortie de la roue dessicante 21, afin qu'une partie (par exemple 10 à 30 %) de l'air sortant de l'échangeur thermique de récupération 22 soit directement évacué vers l'extérieur sans passer par la batterie chauffante de régénération 24R et la roue dessicante 21, pour des questions de capacité de la roue dessicante 21. Une vanne pilotée peut éventuellement être positionnée sur ce bipasse pour pouvoir réguler la quantité d'air prélevé dans la voie de reprise 20R.

La centrale de traitement d'air double flux 1 comporte également, sur sa voie de soufflage 20S, de son entrée ES jusqu'à sa sortie SS, les éléments suivants :
- une batterie chauffante de chauffage 24S placée en aval de l'échangeur thermique enthalpique 26 ;
- un humidificateur de soufflage 25S placé en aval de la batterie chauffante de chauffage 24S ; et
- un ventilateur de soufflage 23S placé en aval de l'humidificateur de soufflage 25S, pour souffler l'air neuf prélevé à l'extérieur EXT dans la zone ZO.

Le ventilateur de soufflage 23S peut cependant être placé ailleurs sur la voie de soufflage 20S, par exemple en amont de la batterie chauffante de chauffage 24S ou en amont de l'humidificateur de soufflage 25S.

L'humidificateur de soufflage 23S est alimenté en eau par une canalisation d'eau branchée sur un réseau d'eau, et sur laquelle est placée une pompe de mise en circulation de l'eau. Il est également avantageux de prévoir, sur cette canalisation d'eau, un dispositif de traitement d'eau.

En outre, au moins un filtre peut être placé sur la voie de soufflage 20S, de préférence en amont de la roue dessicante 21, pour filtrer l'air neuf prélevé à l'extérieur EXT avant d'entrer dans les composants de la centrale de traitement d'air double flux 1.

Il est également envisageable de disposer une batterie de préchauffage électrique, disposée sur la voie de soufflage 20S en amont de la roue dessicante 21, afin de préchauffer l'air neuf avant de passer dans la roue dessicante 21.

Il est également prévu un générateur thermique 3 en liaison avec les batteries chauffantes 24R, 24S via un ballon tampon 30. Le générateur thermique 3 constitue une source de chaleur, de préférence du type durable comme par exemple des capteurs solaires, un dispositif de chauffage au bois, une unité biogaz, une unité d'incinération d'ordures ménagères, un dispositif de cogénération, une chaudière à condensation, un système de récupération de chaleur perdue, etc. ou la combinaison de plusieurs sources de chaleur distinctes.

Le ballon tampon 30 présente une canalisation chaude 31 et une canalisation froide 32, pour la circulation d'un fluide caloporteur respectivement réchauffé et refroidi. Ces voies 31, 32 sont raccordées aux batteries 24R, 24S pour réaliser le chauffage de l'air circulant à travers ces batteries 24R, 24S ; ces batteries 24R, 24S formant des échangeurs de chaleur entre la source chaude (le fluide caloporteur chaud provenant de la canalisation chaude 31) et l'air traversant les batteries 24R, 24S, le fluide caloporteur refroidi retournant au ballon tampon via la canalisation froide 32.

Dans ces voies 31, 32, entre le ballon tampon 30 et les batteries 24R, 24S, le fluide caloporteur est par exemple de l'eau sans traitement antigel particulier, dans la mesure où ces voies seront de préférence disposées à l'intérieur d'un bâtiment. Par contre, dans les voies chaude 36 et froide 37 entre le ballon tampon 30 et le générateur thermique 3, le fluide est de préférence de l'eau complété d'un traitement antigel (par exemple de l'eau avec du glycol) car le générateur thermique 3 et ces voies 36, 37 sont généralement localisées à l'extérieur du bâtiment, et donc exposées au gel.

Plus précisément, la canalisation chaude 31 est reliée à une entrée de la batterie chauffante de régénération 24R pour le fluide caloporteur, et une pompe est placée sur cette canalisation chaude 31 en amont de cette batterie 24R pour la mise en circulation du fluide caloporteur. La canalisation froide 32 est reliée à une sortie de la batterie chauffante de régénération 24R pour le retour du fluide caloporteur dans le ballon tampon 30.

De même, la canalisation chaude 31 est reliée à une entrée de la batterie chauffante de chauffage 24S pour le fluide caloporteur, et une pompe est placée sur cette canalisation chaude 31 en amont de cette batterie chauffante de chauffage 24S pour la mise en circulation du fluide caloporteur. La canalisation froide 32 est reliée à une sortie de la batterie chauffante de chauffage 24S pour le retour du fluide caloporteur dans le ballon tampon 30.

La centrale de traitement d'air double flux 1 comprend également quatre systèmes de régulation de température.

Un premier système de régulation de température est prévu pour la régulation de la température en sortie de la batterie chauffante de régénération 24R, et il comporte :
- une sonde de température placée sur la voie de reprise 20R en sortie de la batterie chauffante de régénération 24R ;
- une vanne motorisée à trois voies placée sur la canalisation froide 32, avec une première voie à débit variable placée sur une dérivation entre la canalisation chaude 31 et la canalisation froide 32 en aval de la pompe, une deuxième voie à débit variable placée sur la canalisation froide 32 en amont et une troisième voie placée sur la canalisation froide 32 en aval ; et
- un organe de contrôle (ou régulateur) qui est relié à la sonde de température et qui pilote la vanne motorisée en fonction de la température en sortie de la batterie chauffante 24R.

L'organe de contrôle effectue une régulation en boucle fermée, notamment du type PID pour « proportionnel intégral dérivé », de la température en sortie de la batterie chauffante de régénération 24R, en contrôlant les débits dans les première et deuxième voies de la vanne motorisée.

Un deuxième système de régulation de température est prévu pour la régulation de la température en sortie de la batterie chauffante de chauffage 24S, et il comporte :
- une sonde de température placée sur la voie de soufflage 20S en sortie de la batterie chauffante de chauffage 24S ;
- une vanne motorisée à trois voies placée sur la canalisation froide 32, avec une première voie à débit variable placée sur une dérivation entre la canalisation chaude 31 et la canalisation froide 32 en aval de la pompe, une deuxième voie à débit variable placée sur la canalisation froide 32 en amont et une troisième voie placée sur la canalisation froide 32 en aval ; et
- un organe de contrôle (ou régulateur) qui est relié à la sonde de température et qui pilote la vanne motorisée en fonction de la température en sortie de la batterie chauffante de chauffage 24S.

L'organe de contrôle effectue une régulation en boucle fermée, notamment du type PID, de la température en sortie de la batterie chauffante de chauffage 24S, en contrôlant les débits dans les première et deuxième voies de la vanne motorisée.

Un troisième système de régulation de température est prévu pour la régulation de la température en sortie de l'humidificateur de reprise 25R, et il comporte :
- une sonde de température placée sur la voie de reprise 20R en sortie de l'humidificateur de reprise 25R ;
- une vanne motorisée à deux voies placée sur la canalisation d'eau en aval de la pompe ;
- un organe de contrôle (ou régulateur) qui est relié à la sonde de température et qui pilote la vanne motorisée en fonction de la température en sortie de l'humidificateur de reprise 25R.

L'organe de contrôle effectue une régulation en boucle fermée, notamment du type PID, de la température en sortie de l'humidificateur de reprise 25R, en contrôlant le débit dans les voies de la vanne motorisée.

Un quatrième système de régulation de température est prévu pour la régulation de la température en sortie de l'humidificateur de soufflage 25S, et il comprend :
- une sonde de température placée sur la voie de soufflage 20S en sortie de l'humidificateur de soufflage 25S ;
- une vanne motorisée à deux voies placée sur la canalisation d'eau en aval de la pompe ;
- un organe de contrôle (ou régulateur) qui est relié à la sonde de température et qui pilote la vanne motorisée en fonction de la température en sortie de l'humidificateur de soufflage 25S.

L'organe de contrôle effectue une régulation en boucle fermée, notamment du type PID, de la température en sortie de l'humidificateur de soufflage 25S, en contrôlant le débit dans les voies de la vanne motorisée.

La centrale de traitement d'air double flux 1 comprend une unité de pilotage qui assure le pilotage d'une partie des éléments de la centrale de traitement d'air double flux 1 décrits ci-dessus pour mettre en œuvre le procédé de traitement d'air conforme à l'invention pour la régulation thermique et le renouvellement d'air de la zone ZO.

Pour cela, cette unité de pilotage 7 est reliée :
- aux ventilateurs de reprise et de soufflage 23R, 23S pour contrôler leurs débits respectifs de ventilation, et d'assurer un équilibrage aéraulique ;
- à la roue dessicante 21 pour commander sa mise en marche/arrêt, et plus spécifiquement reliée à son système de mise en marche/arrêt ;
- à l'échangeur thermique de récupération 22 pour commander sa mise en marche/arrêt, et plus spécifiquement reliée à son système de mise en marche/arrêt ;
- à l'échangeur thermique enthalpique 26 pour commander sa mise en marche/arrêt, et plus spécifiquement reliée à son système de mise en marche/arrêt ;
- aux systèmes de régulation de température pour contrôler les températures de sortie correspondantes ;
- éventuellement à la batterie de préchauffage 29 électrique.

L'unité de pilotage est prévue pour au moins deux modes de fonctionnement qui sont :
- un mode de rafraîchissement pour un abaissement de la température et/ou de l'humidité dans la zone ZO ; et
- un mode de chauffage pour une augmentation de la température dans la zone ZO.

Dans le mode de rafraîchissement, l'unité de pilotage met en œuvre le pilotage suivant :
- la roue dessicante 21 est activée pour procurer une déshumidification et un chauffage de l'air neuf entrant dans la voie de soufflage 20S et, en parallèle, une humidification et un refroidissement de l'air vicié sortant de la voie de reprise 20R ;
- l'échangeur thermique de récupération 22 est activé pour refroidir l'air neuf en sortie de la roue dessicante 21 et réchauffer l'air vicié sortant de l'échangeur thermique enthalpique 26 ;
- l'échangeur thermique enthalpique 26 est inactivé ;
- la batterie chauffante de chauffage 24S est inactive ;
- l'humidificateur de soufflage 25S procure un refroidissement de l'air neuf en sortie de l'échangeur thermique de récupération 22 et un ajustement du niveau d'humidité de l'air soufflé dans la zone ZO ; et
- la batterie chauffante de régénération 24R est activée pour réchauffer l'air vicié sortant de l'échangeur thermique de récupération 22 pour une régénération de la roue dessicante 21.

Dans le mode de chauffage, l'unité de pilotage met en œuvre le pilotage suivant :
- la roue dessicante 21 est désactivée ;
- l'échangeur thermique de récupération 22 est activé pour réchauffer l'air neuf entrant dans la voie de soufflage 20S et refroidir l'air vicié sortant de l'échangeur thermique enthalpique 26 ;
- l'échangeur thermique enthalpique 26 est activé pour humidifier l'air neuf sortant de l'échangeur thermique de récupération 22 par récupération de l'humidité présente dans l'air vicié prélevé dans la zone ZO ;
- la batterie chauffante de chauffage 24S est activée ;
- la batterie chauffante de régénération 24R est inactivée ; et
- l'humidificateur de soufflage 25S procure une humidification de l'air neuf en sortie de l'échangeur thermique enthalpique 26 si nécessaire.

Bien entendu l'exemple de mise en œuvre évoqué ci-dessus ne présente aucun caractère limitatif et d'autres améliorations et détails peuvent être apportés à la centrale de traitement d'air selon l'invention, telle que définie par la revendication 1, sans pour autant sortir du cadre de l'invention où d'autres formes d'échangeur thermique enthalpique peuvent par exemple être réalisées.

## Revendications

1. Centrale de traitement d'air double flux (1) pour la régulation thermique et le renouvellement d'air d'au moins une zone (ZO) à traiter, ladite centrale de traitement d'air double flux (1) étant une centrale de traitement d'air à dessication qui comporte au moins :
- deux voies de circulation d'air entre la zone (ZO) et l'extérieur (EXT), comprenant une voie de reprise (20R) et une voie de soufflage (20S) ;
- un ventilateur de reprise (23R) placé sur la voie de reprise (20R) pour prélever un air vicié dans la zone (ZO) et le rejeter vers l'extérieur (EXT) ;
- un ventilateur de soufflage (23S) placé sur la voie de soufflage (20S) pour aspirer un air neuf à l'extérieur (EXT) et le souffler dans la zone (ZO) ;
- une roue dessicante (21) interposée sur les deux voies de circulation d'air (20R, 20S) ;
- un échangeur thermique de récupération (22) interposé sur les deux voies de circulation d'air (20R, 20S) et procurant un échange calorifique entre l'air vicié prélevé dans la zone (ZO) et l'air neuf aspiré à l'extérieur (EXT) ;
- une batterie chauffante de régénération (24R) placée sur la voie de reprise (20R) en amont de la roue dessicante (21) et en aval de l'échangeur thermique de récupération (22), et procurant un chauffage de l'air vicié pour une régénération de la roue dessicante (21) ;
- un humidificateur de soufflage (25S) placé sur la voie de soufflage (20S) en aval de l'échangeur thermique de récupération (22) ;
- une batterie chauffante de chauffage (24S) placée sur la voie de soufflage (20S) en aval de l'échangeur thermique de récupération (22) ;
- un générateur thermique (3) en liaison avec la batterie chauffante de régénération (24R) et avec la batterie chauffante de chauffage (24S) ;
ladite centrale de traitement d'air double flux (1) étant **caractérisée en ce qu'**elle comprend en outre un échangeur thermique enthalpique (26) interposé sur les deux voies de circulation d'air (20R, 20S) entre l'échangeur thermique de récupération (22) et la zone (ZO), de sorte que l'humidificateur de soufflage (25S) et la batterie chauffante de chauffage (24S) sont en aval de l'échangeur thermique enthalpique (26) sur la voie de soufflage (20S), ledit échangeur thermique enthalpique (26) procurant un échange calorifique et d'humidité entre l'air vicié prélevé dans la zone (ZO) et l'air neuf soufflé dans la zone (ZO).

2. Centrale de traitement d'air double flux (1) selon la revendication 1, dans laquelle, dans un mode de rafraîchissement pour un abaissement de la température et/ou de l'humidité dans la zone (ZO) :
- la roue dessicante (21) est activée pour procurer une déshumidification et un chauffage de l'air neuf entrant dans la voie de soufflage (20S) et, en parallèle, une humidification et un refroidissement de l'air vicié sortant de la voie de reprise (20R) ;
- l'échangeur thermique de récupération (22) est activé pour refroidir l'air neuf en sortie de la roue dessicante (21) et réchauffer l'air vicié sortant de l'échangeur thermique enthalpique (26) ;
- l'échangeur thermique enthalpique (26) est inactivé ;
- la batterie chauffante de chauffage (24S) est inactive ;
- l'humidificateur de soufflage (25S) procure un refroidissement de l'air neuf en sortie de l'échangeur thermique de récupération (22) et un ajustement du niveau d'humidité de l'air soufflé dans la zone (ZO) ;
- la batterie chauffante de régénération (24R) est activée pour réchauffer l'air vicié sortant de l'échangeur thermique de récupération (22) pour une régénération de la roue dessicante (21).

3. Centrale de traitement d'air double flux (1) selon l'une quelconque des revendications 1 et 2, dans laquelle, dans un mode de chauffage pour une augmentation de la température dans la zone (ZO) :
- la roue dessicante (21) est désactivée ;
- l'échangeur thermique de récupération (22) est activé pour réchauffer l'air neuf entrant dans la voie de soufflage (20S) et refroidir l'air vicié sortant de l'échangeur thermique enthalpique (26) ;
- l'échangeur thermique enthalpique (26) est activé pour humidifier l'air neuf sortant de l'échangeur thermique de récupération (22) par récupération de l'humidité présente dans l'air vicié prélevé dans la zone (ZO) ;
- la batterie chauffante de chauffage (24S) est activée ;
- la batterie chauffante de régénération (24R) est inactivée ; et
- l'humidificateur de soufflage (25S) procure une humidification de l'air neuf en sortie de l'échangeur thermique enthalpique (26) si nécessaire.

4. Centrale de traitement d'air double flux (1) selon l'une quelconque des revendications 1 à 3, comprenant en outre un humidificateur de reprise (25R) placé sur la voie de reprise (20R) en amont de l'échangeur thermique enthalpique (26).

5. Centrale de traitement d'air double flux (1) selon l'une quelconque des revendications 1 à 4, dans laquelle l'échangeur thermique enthalpique (26) est du type rotatif.

6. Centrale de traitement d'air double flux (1) selon l'une quelconque des revendications 1 à 5, dans laquelle la batterie chauffante de chauffage (24S) est placée sur la voie de soufflage (20S) en aval de l'échangeur thermique enthalpique (26) et en amont de l'humidificateur de soufflage (25S).

7. Centrale de traitement d'air double flux (1) selon l'une quelconque des revendications 1 à 6, dans laquelle l'échangeur thermique de récupération (22) est choisi parmi une roue de récupération, un échangeur à courant croisé, un échangeur à contre-courant, un échangeur à plaques à contre-courant.

8. Procédé de traitement d'air pour la régulation thermique et le renouvellement d'air d'au moins une zone (ZO) à traiter, ledit procédé consistant à piloter une centrale de traitement d'air double flux (1) conforme à l'une quelconque des revendications 1 à 7 selon au moins deux modes de fonctionnement :
- un mode de rafraîchissement pour un abaissement de la température et/ou de l'humidité dans la zone (ZO), dans lequel :
- la roue dessicante (21) est activée pour procurer une déshumidification et un chauffage de l'air neuf entrant dans la voie de soufflage (20S) et, en parallèle, une humidification et un refroidissement de l'air vicié sortant de la voie de reprise (20R) ;
- l'échangeur thermique de récupération (22) est activé pour refroidir l'air neuf en sortie de la roue dessicante (21) et réchauffer l'air vicié sortant de l'échangeur thermique enthalpique (26) ;
- l'échangeur thermique enthalpique (26) est inactivé ;
- la batterie chauffante de chauffage (24S) est inactive ;
- l'humidificateur de soufflage (25S) procure un refroidissement de l'air neuf en sortie de l'échangeur thermique de récupération (22) et un ajustement du niveau d'humidité de l'air soufflé dans la zone (ZO) ; et
- la batterie chauffante de régénération (24R) est activée pour réchauffer l'air vicié sortant de l'échangeur thermique de récupération (22) pour une régénération de la roue dessicante (21) ;
- un mode de chauffage pour une augmentation de la température dans la zone (ZO), dans lequel :
- la roue dessicante (21) est désactivée ;
- l'échangeur thermique de récupération (22) est activé pour réchauffer l'air neuf entrant dans la voie de soufflage (20S) et refroidir l'air vicié sortant de l'échangeur thermique enthalpique (26) ;
- l'échangeur thermique enthalpique (26) est activé pour humidifier l'air neuf sortant de l'échangeur thermique de récupération (22) par récupération de l'humidité présente dans l'air vicié prélevé dans la zone (ZO) ;
- la batterie chauffante de chauffage (24S) est activée ;
- la batterie chauffante de régénération (24R) est inactivée ; et
- l'humidificateur de soufflage (25S) procure une humidification de l'air neuf en sortie de l'échangeur thermique enthalpique (26) si nécessaire.

9. Procédé de traitement d'air selon la revendication 8, mis en œuvre pour la régulation thermique et le renouvellement d'air d'au moins une zone (ZO) de type bâtiment d'activité aquatique, tel qu'une piscine couverte.

## Patentansprüche

1. Luftaufbereitungsanlage mit Doppelströmung (1) zur Wärmeregelung und Lufterneuerung mindestens einer aufzubereitenden Zone (ZO), wobei die Luftaufbereitungsanlage mit Doppelströmung (1) eine Luftaufbereitungsanlage mit Trocknung ist, die mindestens Folgendes beinhaltet:
- zwei Luftzirkulationskanäle zwischen der Zone (ZO) und dem Außenbereich (EXT), einen Wiederaufnahmekanal (20R) und einen Gebläsekanal (20S) umfassend;
- einen Wiederaufnahmeventilator (23R), der auf dem Wiederaufnahmekanal (20R) platziert ist, um Abluft in der Zone (ZO) zu entnehmen, und diese in den Außenbereich (EXT) abzuweisen;
- einen Gebläseventilator (23S), der auf dem Gebläsekanal (20S) platziert ist, um Frischluft im Außenbereich (EXT) anzusaugen und sie in die Zone (ZO) zu blasen;
- ein Trocknungsrad (21), das auf den beiden Luftzirkulationskanälen (20R, 20S) eingesetzt ist;
- einen Rückgewinnungs-Wärmetauscher (22), der auf den beiden Luftzirkulationskanälen (20R, 20S) eingesetzt ist und einen Wärmeleistungstausch zwischen der in der Zone (ZO) entnommenen Abluft und der im Außenbereich (EXT) angesaugten Frischluft vermittelt;
- ein Regenerations-Heizregister (24R), das auf dem Wiederaufnahmekanal (20R), stromaufwärts des Trocknungsrades (21) und stromabwärts des Rückgewinnungs-Wärmetauschers (22) platziert ist, und ein Beheizen der Abluft zum Regenerieren von dem Trocknungsrad (21) vermittelt;
- einen Gebläsebefeuchter (25S), der auf dem Gebläsekanal (20S), stromabwärts des Rückgewinnungs-Wärmetauschers (22) platziert ist;
- ein Beheiz-Heizregister (24S), das auf dem Gebläsekanal (20S), stromabwärts des Rückgewinnungs-Wärmetauschers (22) platziert ist;
- einen Wärmegenerator (3) in Verbindung mit dem Regenerations-Heizregister (24R) und mit dem Beheiz-Heizregister (24S);
wobei die Luftaufbereitungsanlage mit Doppelströmung (1) **dadurch gekennzeichnet ist, dass** sie weiter einen Enthalpie-Wärmetauscher (26) umfasst, der in den beiden Luftzirkulationskanälen (20R, 20S) zwischen dem Rückgewinnungs-Wärmetauscher (22) und der Zone (ZO) eingesetzt ist, sodass der Gebläsebefeuchter (25S) und das Beheiz-Heizregister (24S) stromabwärts des Enthalpie-Wärmetauschers (26) auf dem Gebläsekanal (20S) sind, wobei der Enthalpie-Wärmetauscher (26) einen Wärmeleistungs- und Feuchtigkeitstausch zwischen der in der Zone (ZO) entnommenen Abluft und der in die Zone (ZO) geblasenen Frischluft vermittelt.

2. Luftaufbereitungsanlage mit Doppelströmung (1) nach Anspruch 1, wobei in einem Erfrischungsmodus zum Absenken der Temperatur und/oder der Feuchtigkeit in der Zone (ZO):
- das Trocknungsrad (21) aktiviert ist, um eine Entfeuchtung und eine Beheizung der in den Gebläsekanal (20S) eintretenden Frischluft, und, parallel dazu eine Befeuchtung und eine Abkühlung der aus dem Wiederaufnahmekanal (20R) austretenden Abluft zu vermitteln;
- der Rückgewinnungs-Wärmetauscher (22) aktiviert ist, um die Frischluft am Austritt des Trocknungsrades (21) abzukühlen, und die aus dem Enthalpie-Wärmetauscher (26) austretende Abluft zu beheizen;
- der Enthalpie-Wärmetauscher (26) deaktiviert ist;
- das Beheiz-Heizregister (24S) deaktiviert ist;
- der Gebläsebefeuchter (25S) eine Abkühlung der Frischluft am Austritt des Rückgewinnungs-Wärmetauschers (22) und eine Anpassung der Feuchtigkeitsstufe der in die Zone (ZO) geblasenen Luft vermittelt;
- das Regenerations-Heizregister (24R) aktiviert ist, um die aus dem Rückgewinnungs-Wärmetauscher (22) austretende Abluft für eine Regenerierung des Trocknungsrades (21) zu beheizen.

3. Luftaufbereitungsanlage mit Doppelströmung (1) nach einem der Ansprüche 1 und 2, wobei in einem Beheizungsmodus für eine Erhöhung der Temperatur in der Zone (ZO):
- das Trocknungsrad (21) deaktiviert ist;
- der Rückgewinnungs-Wärmetauscher (22) aktiviert ist, um die in den Gebläsekanal (20S) eintretende Frischluft zu beheizen und die aus dem Enthalpie-Wärmetauscher (26) austretende Abluft abzukühlen;
- der Enthalpie-Wärmetauscher (26) aktiviert ist, um die aus dem Rückgewinnungs-Wärmetauscher (22) austretende Frischluft durch Rückgewinnung der in der Zone (ZO) entnommenen Abluft vorhandenen Feuchtigkeit zu befeuchten;
- das Beheiz-Heizregister (24S) aktiviert ist;
- das Regenerations-Heizregister (24R) deaktiviert ist; und
- der Gebläsebefeuchter (25S) bei Bedarf eine Befeuchtung der Frischluft am Austritt des Enthalpie-Wärmetauschers (26) vermittelt.

4. Luftaufbereitungsanlage mit Doppelströmung (1) nach einem der Ansprüche 1 bis 3, weiter einen Wiederaufnahmebefeuchter (25R) umfassend, der auf dem Wiederaufnahmekanal (20R) stromaufwärts des Enthalpie-Wärmetauschers (26) platziert ist.

5. Luftaufbereitungsanlage mit Doppelströmung (1) nach einem der Ansprüche 1 bis 4, wobei der Enthalpie-Wärmetauscher (26) in der Art drehend ist.

6. Luftaufbereitungsanlage mit Doppelströmung (1) nach einem der Ansprüche 1 bis 5, wobei das Beheiz-Heizregister (24S) auf dem Gebläsekanal (20S) stromabwärts des Enthalpie-Wärmetauschers (26) und stromaufwärts des Gebläsebefeuchters (25S) platziert ist.

7. Luftaufbereitungsanlage mit Doppelströmung (1) nach einem der Ansprüche 1 bis 6, wobei der Rückgewinnungs-Wärmetauscher (22) aus einem Rückgewinnungsrad, einem Kreuzstromtauscher, einem Gegenstromtauscher, einem Gegenstrom-Plattentauscher ausgewählt wird.

8. Verfahren zur Luftaufbereitung zur Wärmeregelung und Lufterneuerung mindestens einer aufzubereitenden Zone (ZO), wobei das Verfahren darin besteht, eine Luftaufbereitungsanlage mit Doppelströmung (1) nach einem der Ansprüche 1 bis 7 gemäß mindestens zwei Betriebsmodi zu steuern:
- einem Erfrischungsmodus zum Absenken der Temperatur und/oder der Feuchtigkeit in der Zone (ZO), bei dem:
- das Trocknungsrad (21) aktiviert ist, um eine Entfeuchtung und eine Beheizung der in den Gebläsekanal (20S) eintretenden Frischluft, und, parallel dazu eine Befeuchtung und eine Abkühlung der aus dem Wiederaufnahmekanal (20R) austretenden Abluft zu vermitteln;
- der Rückgewinnungs-Wärmetauscher (22) aktiviert ist, um die Frischluft am Austritt des Trocknungsrades (21) abzukühlen, und die aus dem Enthalpie-Wärmetauscher (26) austretende Abluft zu beheizen;
- der Enthalpie-Wärmetauscher (26) deaktiviert ist;
- das Beheiz-Heizregister (24S) deaktiviert ist;
- der Gebläsebefeuchter (25S) eine Abkühlung der Frischluft am Austritt des Rückgewinnungs-Wärmetauschers (22) und eine Anpassung der Feuchtigkeitsstufe der in die Zone (ZO) geblasenen Luft vermittelt;
- das Regenerations-Heizregister (24R) aktiviert ist, um die aus dem Rückgewinnungs-Wärmetauscher (22) austretende Abluft für eine Regenerierung des Trocknungsrades (21) zu beheizen,
- einem Beheizungsmodus für eine Erhöhung der Temperatur in der Zone (ZO), bei dem:
- das Trocknungsrad (21) deaktiviert ist;
- der Rückgewinnungs-Wärmetauscher (22) aktiviert ist, um die in den Gebläsekanal (20S) eintretende Frischluft zu beheizen und die aus dem Enthalpie-Wärmetauscher (26) austretende Abluft abzukühlen;
- der Enthalpie-Wärmetauscher (26) aktiviert ist, um die aus dem Rückgewinnungs-Wärmetauscher (22) austretende Frischluft durch Rückgewinnung der in der Zone (ZO) entnommenen Abluft vorhandenen Feuchtigkeit zu befeuchten;
- das Beheiz-Heizregister (24S) aktiviert ist;
- das Regenerations-Heizregister (24R) deaktiviert ist; und
- der Gebläsebefeuchter (25S) bei Bedarf eine Befeuchtung der Frischluft am Austritt des Enthalpie-Wärmetauschers (26) vermittelt.

9. Verfahren zur Luftaufbereitung nach Anspruch 8, das zur Wärmeregelung und Lufterneuerung mindestens einer Zone (ZO) der Art eines Wasseraktivitätsgebäudes, wie ein Hallenbad umgesetzt wird.

## Claims

1. A double flow air-handling unit (1) for thermal regulation and air renewal of at least one zone (ZO) to be treated, said double flow air-handling unit (1) being a desiccant air-handling unit that includes at least:
- two air flow paths between the zone (ZO) and the outside (EXT), comprising a return path (20R) and a blowing path (20S);
- a return fan (23R) placed on the return path (20R) to extract stale air from the zone (ZO) and reject it to the outside (EXT);
- a blowing fan (23S) placed on the blowing path (20S) to draw in fresh air from outside (EXT) and blow it into the zone (ZO);
- a desiccant wheel (21) interposed on the two air flow paths (20R, 20S);
- a recovery heat exchanger (22) interposed on the two air flow paths (20R, 20S) and providing a heat exchanging between the stale air extracted from the zone (ZO) and the fresh air drawn in from outside (EXT);
- a regeneration heat battery (24R) placed on the return path (20R) upstream of the desiccant wheel (21) and downstream of the recovery heat exchanger (22), and providing heating of the stale air for a regeneration of the desiccant wheel (21);
- a blowing humidifier (25S) placed on the blowing path (20S) downstream of the recovery heat exchanger (22);
- a heating heat battery (24S) placed on the blowing path (20S) downstream of the recovery heat exchanger (22);
- a heat generator (3) in connection with the regeneration heat battery (24R) and with the heating heat battery (24S);
said double flow air-handling unit (1) being **characterized in that** it further comprises an enthalpy heat exchanger (26) interposed on the two air flow paths (20R, 20S) between the recovery heat exchanger (22) and the zone (ZO), so that the blowing humidifier (25S) and the heating heat battery (24S) are downstream of the enthalpy heat exchanger (26) on the blowing path (20S), said enthalpy heat exchanger (26) providing a heat and humidity exchanging between the stale air extracted from the zone (ZO) and the fresh air blown into the zone (ZO).

2. The double flow air-handling unit (1) according to claim 1, wherein, in a cooling mode for lowering the temperature and/or the humidity in the zone (ZO):
- the desiccant wheel (21) is activated to provide a dehumidification and heating of the fresh air entering the blowing path (20S) and, in parallel, a humidification and a cooling of the stale air leaving the return path (20R);
- the recovery heat exchanger (22) is activated to cool the fresh air at the outlet of the desiccant wheel (21) and to heat the stale air leaving the enthalpy heat exchanger (26);
- the enthalpy heat exchanger (26) is deactivated;
- the heating heat battery (24S) is inactive;
- the blowing humidifier (25S) provides a cooling of the fresh air at the outlet of the recovery heat exchanger (22) and an adjustment of the humidity level of the air blown into the zone (ZO);
- the regeneration heat battery (24R) is activated to heat the stale air leaving the recovery heat exchanger (22) for a regeneration of the desiccant wheel (21).

3. The double flow air-handling unit (1) according to any one of claims 1 and 2, wherein, in a heating mode for an increase in the temperature in the zone (ZO):
- the desiccant wheel (21) is deactivated;
- the recovery heat exchanger (22) is activated to heat the fresh air entering the blowing path (20S) and cool the stale air leaving the enthalpy heat exchanger (26);
- the enthalpy heat exchanger (26) is activated to humidify the fresh air leaving the recovery heat exchanger (22) by recovering the humidity present in the stale air extracted from the zone (ZO);
- the heating heat battery (24S) is activated;
- the regeneration heat battery (24R) is deactivated; and
- the blowing humidifier (25S) provides humidification of the fresh air at the outlet of the enthalpy heat exchanger (26) if necessary.

4. The double flow air-handling unit (1) according to any one of claims 1 to 3, further comprising a return humidifier (25R) placed on the return path (20R) upstream of the enthalpy heat exchanger (26).

5. The double flow air-handling unit (1) according to any one of claims 1 to 4, wherein the enthalpy heat exchanger (26) is of the rotary type.

6. The double flow air-handling unit (1) according to any one of claims 1 to 5, wherein the heating heat battery (24S) is placed on the blowing path (20S) downstream of the enthalpy heat exchanger (26) and upstream of the blowing humidifier (25S).

7. The double flow air-handling unit (1) according to any one of claims 1 to 6, wherein the recovery heat exchanger (22) is selected from a recovery wheel, a cross-current exchanger, a counter-current exchanger, a counter-current plate exchanger.

8. A method for handling air for thermal regulation and air renewal of at least one zone (ZO) to be treated, said method consisting in controlling a double flow air-handling unit (1) in accordance with any one of claims 1 to 7 according to at least two operating modes:
- a cooling mode for lowering the temperature and/or the humidity in the zone (ZO), in which:
- the desiccant wheel (21) is activated to provide a dehumidification and a heating of the fresh air entering the blowing path (20S) and, in parallel, a humidification and a cooling of the stale air leaving the return path (20R);
- the recovery heat exchanger (22) is activated to cool the fresh air at the outlet of the desiccant wheel (21) and to heat the stale air leaving the enthalpy heat exchanger (26);
- the enthalpy heat exchanger (26) is deactivated;
- the heating heat battery (24S) is inactive;
- the blowing humidifier (25S) provides a cooling of the fresh air at the outlet of the recovery heat exchanger (22) and an adjustment of the humidity level of the air blown into the zone (ZO); and
- the regeneration heat battery (24R) is activated to heat the stale air leaving the recovery heat exchanger (22) for a regeneration of the desiccant wheel (21);
- a heating mode for increasing the temperature in the zone (ZO), in which:
- the desiccant wheel (21) is deactivated;
- the recovery heat exchanger (22) is activated to heat the fresh air entering the blowing path (20S) and to cool the stale air leaving the enthalpy heat exchanger (26);
- the enthalpy heat exchanger (26) is activated to humidify the fresh air leaving the recovery heat exchanger (22) by recovering the humidity present in the stale air extracted from the zone (ZO);
- the heating heat battery (24S) is activated;
- the regeneration heat battery (24R) is deactivated; and the blowing humidifier (25S) provides a humidification of the fresh air at the outlet of the enthalpy heat exchanger (26) if necessary.

9. The method for handling air according to claim 8, implemented for the thermal regulation and the air renewal of at least one zone (ZO) of the aquatic activity building type, such as an indoor swimming pool.
